Europäisches Patentamt

European Patent Office

Office européen des brevets

(19)

(11) Numéro de publication: **0 072 264**
**B1**

(12) # FASCICULE DE BREVET EUROPÉEN

(45) Date de publication du fascicule du brevet:
**25.11.87**

(51) Int. Cl.⁴: **B 01 D 23/16,** B 01 D 23/20, B 01 D 23/24

(21) Numéro de dépôt: **82401074.8**

(22) Date de dépôt: **14.06.82**

(54) **Filtre à remplissage de matériau granulaire.**

(30) Priorité: **25.06.81 FR 8112462**

(43) Date de publication de la demande:
**16.02.83 Bulletin 83/7**

(45) Mention de la délivrance du brevet:
**25.11.87 Bulletin 87/48**

(84) Etats contractants désignés:
**BE CH DE GB IT LI**

(56) Documents cité:
**FR-A-982 050**
**FR-A-1 102 586**
**GB-A-112 672**
**GB-A-494 934**

(73) Titulaire: **"DEGREMONT" Société dite:, 183, Avenue du 18 Juin 1940, F-92508 Rueil- Malmaison Cédex (FR)**

(72) Inventeur: **Louboutin, Robert, La Duché Route des Flambertins, F-78121 Crespieres (FR)**
Inventeur: **Riotte, Michel, 161, rue de Buzenval, F-92380 Garches (FR)**

(74) Mandataire: **Armengaud, Charles, Cabinet ARMENGAUD AINE 3, Avenue Bugeaud, F-75116 Paris (FR)**

EP 0 072 264 B1

LIBER, STOCKHOLM 1987

## Description

La présente invention concerne les filtres à remplissage de matériau granulaire dans lesquels le liquide à traiter s'écoulant de haut en bas à travers le matériau granulaire totalement immergé, est mis en contact avec un gaz circulant de bas en haut à travers ledit matériau granulaire.

Ces filtres sont utilisés en traitement des eaux de toute nature, en particulier pour réaliser la nitrification des eaux, processus consistant à provoquer par action de bactéries spécifiques l'oxydation de l'azote organique et ammoniacal en nitrites puis en nitrates. Ces bactéries ne se développant qu'en milieu aérobie, le processus de nitrification implique la dissolution dans l'eau à traiter d'une certaine quantité d'oxygène, fonction du débit d'eau à traiter et de la quantité d'azote à oxyder. La quantité requise d'oxygène, en provenance de l'air atmosphérique par exemple, est donc introduite dans le filtre, généralennent l'air est injecté de bas en haut du filtre à travers le remplissage de matériau granulaire.

Du fait de la croissance bactérienne inhérente au processus de nitrification, il se produit dans le temps un colmatage du matériau granulaire qu'il est nécessaire de nettoyer par un lavage à l'eau et à l'air.

Ces filtres à remplissage de matériaux granulaires se présentent sous la forme d'une enceinte en béton par exemple ouverte vers le haut comportant, disposé à une certaine distance du fond de l'enceinte, un plancher supportant le matériau filtrant totalement immergé, l'eau à traiter circulant de haut en bas à travers le lit de matériau granulaire et sortant au-dessous du plancher. Ce plancher est équipé de buselures permettant l'introduction de l'eau et de l'air destinés au lavage du filtre par circulation de bas en haut à travers le matériau filtrant.

Dans ces appareils connus la distribution du gaz nécessaire au développement du processus de nitrification se fait habituellement par un système de tuyauteries perforées disposé au-dessus du plancher à buselures au travers duquel est drainée l'eau ayant traversé de haut en bas le matériau granulaire.

Ces appareils présentent plusieurs inconvénients : leur construction est compliquée. Il faut en effet disposer au sein du matériau granulaire un réseau de tuyauteries; ce réseau étant soumis à des efforts plus ou moins importants suivant l'état de colmatage du filtre. Il est en outre nécessaire de le supporter.

La distribution du gaz de nitrification par un réseau de tuyauteries ne permet d'en assurer la bonne répartition que si son débit ne s'écarte pas trop de la valeur initialement prise en compte lors du calcul de ce dispositif. Il est évident que pour l'économie du système, ce débit de gaz doit être ajusté au débit d'eau à traiter et à la quantité d'azote à oxyder, paramètres variables de l'installation de traitement. Un tel ajustement, qui ne doit pas porter atteinte au résultat qualitatif du traitement, ne peut être obtenu que si la répartition du gaz dans la masse granulaire reste correcte lorsque son débit décroît, sinon il se forme localement au sein de cette masse des zones anaérobies préjudiciables à la vie des bactéries nitrifiantes, et donc à la qualité du traitement, et ceci d'autant plus que la croissance bactérienne étant arrêtée dans lesdites zones, elles constitueraient des sites de moindre colmatage où l'eau à traiter aurait tendance à s'écouler préférentiellement.

La présence d'un réseau de tuyauteries au-dessus du plancher-support du matériau granulaire perturbe l'écoulement des fluides au moment de son lavage et nuit donc à l'efficacité dudit lavage.

La présente invention permet de remédier aux inconvénients des dispositions ci-dessus et adoptées jusqu'à présent.

"Un autre filtre est décrit dans le document GB-A-494 934. Dans ce filtre, le matériau granulaire filtrant est aussi disposé dans une enceinte ouverte vers le haut sur un plancher support muni de buselures dont les têtes perforées sont noyées dans le matériau filtrant. Le plancher, prévu à une certaine distance du fond de l'enceinte, délimite avec ce fond une chambre dans laquelle est capté le liquide filtré sortant de toutes les buselures. Les buselures dont les tiges creuses plongeant dans la chambre sont ouvertes à leur extrémité inférieure, sont de deux types, les tiges des buselures d'un type étant plus longues que celles des buselures de l'autre type. Pendant la phase de lavage au cours de laquelle de l'air est introduit sous pression dans la chambre afin de créer un matelas d'air entre le plancher et la surface de l'eau dans la chambre, les extrémités inférieures des tiges des buselures à tige longue sont situées au-dessous de cette surface tandis que celles des autres buselures sont situées au-dessus. Il en résulte que l'air circule de bas en haut à travers le matériau filtrant par les buselures à tige courte et l'eau, alimentée sous pression, par celles à tige longue."

L'invention a pour objet un filtre à remplissage de matériau granulaire, pour effectuer la nitrification des eaux dans un processus comportant une phase de filtration pendant laquelle la nitrification est réalisée au moyen de bactéries aérobies, l'eau à traiter s'écoulant de haut en bas, étant mise en contact avec l'air atmosphérique circulant du bas vers le haut du matériau granulaire, et une phase de décolmatage et de nettoyage du filtre pendant laquelle le filtre est lavé par un courant d'eau et d'air circulant de bas en haut, ledit filtre comportant une enceinte ouverte vers le haut et un matériau granulaire disposé sur un plancher-support prévu à une certaine distance du fond de l'enceinte et délimitant avec ce fond une chambre dans laquelle l'eau filtrée est collectée, le plancher-support étant muni de deux types, A et B, de buselures dont chacune comporte une tête perforée noyée dans le matériau granulaire et une tige creuse ouverte à l'extrémité inférieure plongeant dans la chambre, les tiges des buselures de type A étant munies d'un orifice inférieur sous la forme d'une fente et d'un orifice supérieur, alors que les tiges des buselures de type B présentent un orifice supérieur et, séparé de cet orifice par une certaine distance, soit un orifice inférieur sous la forme d'une fente, soit un nombre n d'orifices inférieurs étagés, l'orifice inférieur ou le plus bas des orifices étagés étant prévu à un niveau supérieur à celui de l'orifice supérieur des tiges des buselures de type A, cette disposition permettant aux deux types de buselures d'assurer simultanément pendant la phase de filtration, par la présence, sous le plancher-support d'un matelas d'air d'une certaine épaisseur, les unes de type A la collecte de l'eau filtrée dans la chambre, les autres, de type B la distribution de l'air du bas vers le haut du matériau granulaire.

Dans une réalisation préférée la section des orifices des tiges des buselures B est telle que la pression du gaz introduit dans la chambre sous le plancher, au-dessus du liquide filtré, est toujours inférieure à la perte de charge créée par la vanne de sortie du liquide filtré, disposée de façon connue dans un canal latéral en communication avec la chambre de collecte du liquide filtré.

Suivant une caractéristique facultative de l'invention les n orifices inférieurs étagés de la tige des buselures B sont équidistants et de section égale.

Suivant une autre caractéristique facultative de l'invention la section totale des orifices supérieurs des buselures B est déterminée de façon à ce que l'épaisseur du matelas d'air soit suffisante pour permettre, pour le débit minimal de gaz, une alimentation uniforme de toutes les buselures B et donc une distribution homogène du gaz au sein du matériau granulaire.

Suivant encore une autre caractéristique facultative de l'invention, la section totale des orifices des buselures B est telle que, pour un débit maximal d'air introduit sous le plancher, les orifices des buselures A restent immergés dans le liquide filtré.

Pendant la phase de lavage à contre-courant à l'air et à l'eau du matériau colmaté, l'eau et l'air sont introduits simultanément dans la chambre située au-dessous du plancher; l'eau à la partie inférieure, l'air à la partie supérieur; l'épaisseur de la couche d'air est telle que l'ensemble des buselures le distribue de manière uniforme à travers le matériau colmaté, le débit d'air utilisé dans cette phase de fonctionnement du filtre pouvant être jusqu'à dix fois supérieur au débit utilisé au moment de la filtration.

La description qui va suivre en référence aux figures annexées permettra de mieux comprendre l'invention, décrite ici dans son application à un filtre pour la nitrification des eaux, l'exemple choisi ne limitant en rien la portée de l'invention qui peut être mise en oeuvre toutes les fois où un gaz et un liquide circulent à contre-courant au travers d'un matériau granulaire totalement immergé.

-La figure 1 est une coupe transversale de l'appareil

- La figure 2 est une coupe longitudinale

- La figure 3 est une vue partielle à plus grande échelle, du plancher équipé de ses buselures

Dans l'exemple traité, l'appareil se présente sous la forme d'une enceinte de section rectangulaire ou carrée.

Comme connu, le filtre comporte, disposé à une certaine hauteur au-dessus au fond de l'enceinte, un plancher 1 équipé de buselures 2 et supportant une charge de matériau granulaire 3 dont le niveau supérieur est à distance H de la face inférieure du plancher. La chambre 4 comprise entre cette face et le fond de l'enceinte, est en communication avec un canal 5, à sa partie supérieure par une série d'orifices 6 et à sa partie inférieure par d'autres orifices 7. Les orifices supérieurs 6 sont destinés à distribuer sous le plancher l'air nécessaire au procédé de nitrification et celui requis pour le lavage du matériau granulaire 3, les orifices inférieurs 7 servant en marche normale, à la collecte de l'eau traité et en lavage à la distribution de l'eau nécessaire pour cette opération. Au-dessus de ce canal 5, une goulotte 8 assure l'amenée de liquide à traiter sur la masse granulaire, ainsi que la reprise de l'eau de lavage distribuée sous le plancher 1 pendant l'opération correspondante.

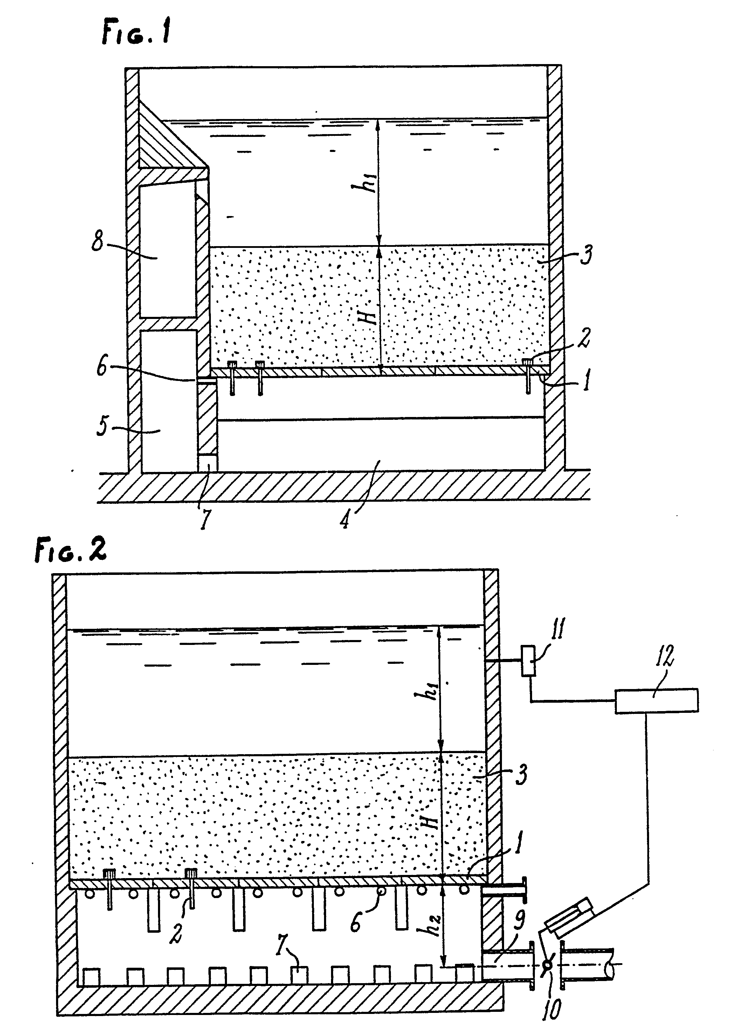

Ainsi que le montre la figure 2, la tubulure 9 de sortie d'eau traitée du canal 5 est équipée d'une vanne 10 dont l'ouverture est commandée, à partir du signal donné par un capteur 11 qui mesure le niveau de l'eau dans l'enceinte, par un régulateur 12 de façon à maintenir ce niveau à une cote fixe $h_1$ au-dessus du matériau granulaire, quel que soit le débit d'eau traité et/ou l'état de colmatage du matériau granulaire dans les limites permises par l'hydraulique du système, l'axe de ladite vanne étant à la distance $h_2$ du dessous du plancher 1.

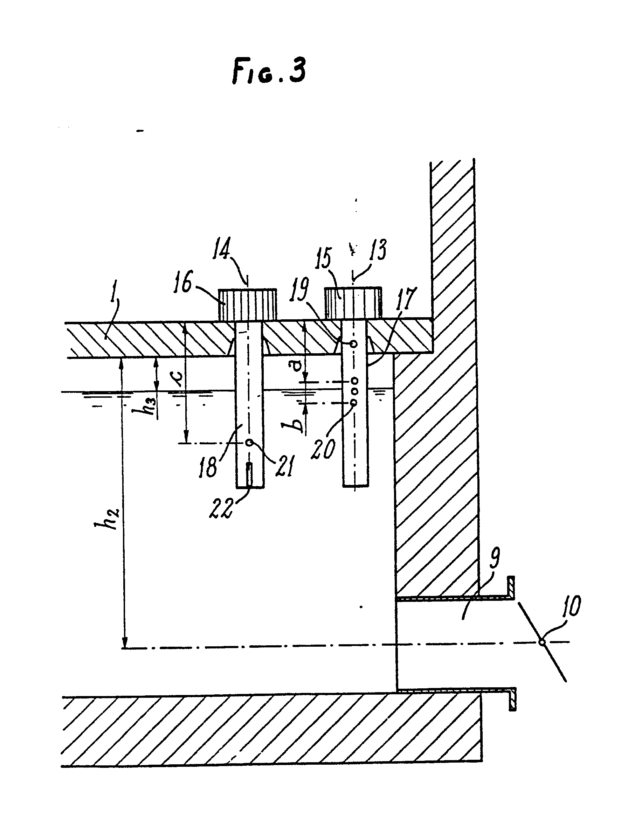

Suivant la figure 3, le plancher 1 est équipé de deux sortes de buselures 13 et 14 dont les têtes 15 et 16 sont identiques, et dont les tiges 17 et 18 sont de même longueur et de même diamètre intérieur. La tige 17 de la buselure 13 est percée à sa partie supérieure d'un orifice 19 de section $s_1$ et à une distance "a" de son embase sur une longueur "b" d'une série de "n" orifices 20 étagés, qui peuvent avantageusement être d'égale section $s_2$ et équidistants. Suivant une autre forme de l'invention, ces orifices peuvent être remplacés par une fente de section $n \times s_2$.

La tige 18 de la buselure 14 comporte à une distance "c" de son embase telle que $c > a + b$, un orifice 21 de section $s_3$, et, suivant une disposition classique, à sa partie inférieure une fente 22.

Pendant la phase de marche normale de l'appareil, l'eau circulant de haut en bas au travers de la masse granulaire 5 est recueillie au niveau du plancher 1 par les buselures du type 14 alors que l'air nécessaire au procédé de nitrification qui circule de bas en haut est introduit sous le plancher 1 et pénètre dans la masse granulaire au travers des buselures du type 13.

Pendant la phase de lavage à l'eau et à l'air du matériau granulaire colmaté, les deux fluides qui circulent alors de bas en haut sont distribués par les deux types de buselures.

La description, qui va suivre, du fonctionnement d'un filtre équipé de $N_1$ buselures du type 13 et de $N_2$ buselures du type 14 permettra de mieux saisir le principe de l'invention.

L'eau à traiter admise au-dessus de la masse granulaire 3 par exemple par la goulotte 8, la traverse et pénètre dans la chambre 4 au travers des buselures 14 et 13 -tout au moins concernant ces dernières, en début de cycle-. De cette chambre, elle s'écoule par les orifices 7 dans le canal 5 d'où elle est évacuée à l'extérieur au travers de la tubulure 9 et de la vanne 10. Le dégré d'ouverture de cette vanne 10 est réglé par le régulateur 12 à partir de l'indication donnée par le capteur de niveau 11 de façon à maintenir constante la distance $h_1$ entre le plan d'eau dans le filtre et le niveau de la matière granulaire 3. Lorsque l'appareil se trouve en début de cycle, et donc propre, en désignant par $\Delta p_m$, la perte de charge exprimée en mètre de colonne d'eau consécutive à l'écoulement de l'eau au travers de la masse granulaire, $j_1$ la perte de charge au passage des buselures 14, $j_2$ celle dûe à l'écoulement dans la tubulure 9, ces deux pertes de charge étant également exprimées en mètre de colonne d'eau, en supposant par exemple que la restitution de l'eau par cette tubulure se fait à la pression atmosphérique, au niveau de son axe, la distance $h_1$ sera maintenue constante s'il y a égalité entre le débit d'eau qui entre dans l'appareil et celui qui en sort, ce qui suppose la création par la vanne 10 d'une perte de charge égale à l'excès de charge disponible pour le débit entrant dans l'appareil. Le degré d'ouverture de cette vanne sera donc réglé automatiquement par le régulateur 12, de telle sorte que pour ce débit, elle crée une perte de charge égale à $H + h_1 + h_2 - (j_1 + j_2 + \Delta p_m)$.

L'air de nitrification est introduit à la partie supérieure du canal 5 dans lequel il circule à contre courant de l'eau traitée et pénètre dans la chambre 4 par les orifices supérieurs 6, sous le plancher 1 où la pression est $H + h_1 - (j_1 + \Delta p_m)$. La tubulure 9 étant déterminée de telle sorte que sa perte de charge $j_2$ soit très faible devant $h_2$, la pression sous le plancher 1 étant inférieure à la perte de charge créée par la vanne 10, l'aire tendance à s'échapper par les orifices 19 percés à la partie supérieure des tiges 17 des buselures 13. Du fait de la perte de charge créée par le passage de l'air dans ces orifices, il s'établit sous le plancher un matelas d'air d'épaisseur $h_3$ dans lequel règne une pression égale à $H + h_1 + h_3 - (j + \Delta p_m)$. La section totale $N_1 \times s_1$ des orifices 19 est déterminée de telle sorte que l'épaisseur $h_3$ du matelas d'air soit suffisante pour permettre pour le débit minimal d'air de nitrification une alimentation uniforme de toutes les buselures du type 13, et donc une distribution homogène de l'air au sein du matériau granulaire.

Si le débit d'air nécessaire à la nitrification vient à augmenter, la hauteur $h_3$ s'accroît jusqu'à découvrir un ou plusieurs des orifices 20. La distance entre ces orifices est déterminée de telle sorte que, compte tenu des défauts d'horizontalité du plancher, la différence, d'une buselure à l'autre, du nombre d'orifices débitant de l'air ne soit pas supérieure à 1. Le nombre d'orifices est, quant à lui, défini compte tenu de la précision recherchée pour l'équirépartition du débit d'air: plus ce nombre est grand, meilleure est cette équirépartition. Par ailleurs, la section totale des orifices des types de buselures 13 $N_1$ $(s_1 + n s_2)$est déterminée de façon à ce que, pour le débit maximal d'air de nitrification correspondant à l'épaisseur $h_3$ maximale du matelas d'air, cette épaisseur est telle que les orifices 21 des buselures 14 ne soient pas dénoyés. L'air de nitrification est dans ce cas distribué exclusivement par les buselures du type 13.

Il a été constaté qu'il en était bien ainsi et que dès que les buselures 13 débitent de l'air, elles ne participent plus à la reprise de l'eau. Bien au contraire, il a été trouvé que par suite de la création d'un phénomène d'air-lift à l'intérieur de leur tige 17, il s'établit dans ces buselures un courant d'eau ascendant. De l'eau est ainsi ramenée de la chambre 4 au-dessus du plancher 1 au travers des buselures 13 et retourne dans cette même chambre au travers des buselures 14.

Lorsque le matériau granulaire se colmate du fait du développement de la culture bactérienne, la vanne 10 de sortie d'eau s'ouvre de telle sorte que la diminution de sa perte de charge qui en résulte compense exactement l'accroissement de la perte de charge du matériau granulaire. Lorsque la valeur maximale admise $\Delta p_m$ de la perte de charge de ce matériau est atteinte, le degré d'ouverture de la vanne 10 est tel qu'elle crée une perte de charge égale à $H + h_1 + h_2 - (j_1 + j_2 + \Delta p_m)$. La pression de l'air sous le plancher est alors $H + h_3 - (j_1 + \Delta p_m)$, et comme $h_2 - j_2$ est toujours supérieur à $h_3$, cette pression demeure inférieure à la perte de charge créée par la vanne 10 et l'air introduit sous le plancher 1 continue à passer par les orifices des buselures 13 et à circuler naturellement de bas en haut au sein du matériau granulaire.

Le matériau granulaire étant colmaté, on doit procéder à son lavage qui se fait de manière connue en le soumettant à un courant ascendant simultané d'eau et d'air.

Pour ce faire, la vanne 10 ayant été préalablement fermée, de l'eau et de l'air sont envoyés dans le canal 5, l'eau pénétrant dans la chambre 4 par les orifices inférieurs 7 et l'air par les orifices supérieurs 6. Du fait que le débit d'air de lavage est supérieur à celui de nitrification, il se forme sous le plancher 1 un matelas d'air d'épaisseur supérieure à la valeur maximale de $h_3$, ce qui fait que l'orifice 19 et les "n" orifices 20

des $N_1$ buselures 13, ainsi que l'orifice 21 et une partie $s_4$ de la fente 22 des $N_2$ buselures 14 se trouvent être dans la phase gazeuse.

Dans ces conditions, si q est le débit maximal d'air de nitrification et Q le débit d'air de lavage, en adoptant pour $N_1$ la valeur $N_1 = \frac{1}{2}(N_1 + N_2)$, et pour la section $s_3$ de l'orifice 21 et celle $a_4$ de la partie découverte de la fente 22 des valeurs qui vérifient l'égalité $s_1 + ns_2 = s_3 + s_4$, on constate que toutes les buselures débitent sensiblement la même quantité d'air. L'eau de lavage pénètre dans les tiges de buselures qui sont de diamètres identiques par leurs extrémités inférieures. On obtient ainsi un lavage homogène de toute la masse granulaire.

**Revendications**

1. Filtre à remplissage de matériau granulaire, pour effectuer la nitrification des eaux dans un processus comportant une phase de filtration pendant laquelle la nitrification est réalisée au moyen de bactéries aérobies, l'eau à traiter s'écoulant de haut en bas, étant mise en contact avec l'air atmosphérique circulant du bas vers le haut du matériau granulaire, et une phase de décolmatage et de nettoyage du filtre pendant laquelle le filtre est lavé par un courant d'eau et d'air circulant de bas en haut, ledit filtre comportant une enceinte ouverte vers le haut et un matériau granulaire (3) disposé sur un plancher-support (1) prévu à une certaine distance du fond de l'enceinte et délimitant avec ce fond une chambre (4) dans laquelle l'eau filtrée est collectée, le plancher-support (1) étant muni de deux types, A et B, de buselures (14, 13) dont chacune comporte une tête perforée (15, 16) noyée dans le matériau granulaire (3) et une tige creuse (18, 17) ouverte à l'extrémité inférieure plongeant dans la chambre, les tiges (18) des buselures (14) de type A étant munies d'un orifice inférieur sous la forme d'une fente (22) et d'un orifice supérieur (21) alors que les tiges (17) des buselures (13) de type B présentent un orifice supérieur (19) et, séparé de cet orifice par une certaine distance, soit un orifice inférieur sous la forme d'une fente, soit un nombre n d'orifices inférieurs étagés (20), l'orifice inférieur ou le plus bas des orifices étagés étant prévu à un niveau supérieur à celui de l'orifice supérieur (21) des tiges (18) des buselures (14) de type A, cette disposition permettant aux deux types de buselures d'assurer simultanément pendant la phase de filtration par la présence, sous le plancher-support (1) d'un matelas d'air d'une certaine épaisseur les unes, de type A, la collecte de l'eau filtrée dans la chambre, les autres, de type B, la distribution de l'air du bas vers le haut du matériau granulaire (3).

2. Filtre suivant la révendication 1, caractérisé en ce que les n orifices inférieurs étagés (20) dé la tigé des buselures B (13) sont équidistants et de séction s égale.

3. Filtre suivant la revendication 1, caractérisé en ce que la section totale $N_1 \times s_1$ des orifices supérieurs (19) des buselures B est déterminée de façon à ce que l'épaisseur ($h_3$) du matelas d'air soit suffisante pour permettre, pour le débit minimal de gaz, une alimentation uniforme de toutes les buselures B et donc une distribution homogène du gaz au sein du matériau granulaire.

4. Filtre suivant la revendication 1, caractérisé en ce que la section totale des orifices des buselures B est telle que pour un débit maximal d'air introduit sous le plancher, les orifices des buselures A restent immergés dans le liquide filtré.

**Patentansprüche**

1. Filter mit angeordnetem körnigem Material zur Nitrifikation von Wasser in einem Verfahren, das aus einer Filtrationsphase, in der die Nitrifikation durch aerobe Bakterien erfolgt, wobei das zu behandelnde Wasser von oben nach unten läuft und dabei mit atmosphärischer Luft, die in dem körnigen Material von unten nach oben strömt, in Berührung kommt, und einer Phase zur Spülung und Reinigung des Filters, in der der Filter durch einen Strom von Wasser und Luft, der von unten nach oben strömt, gereinigt wird, besteht, wobei der Filter aus einem nach oben offenen Gehäuse und einem körnigen Material (3) besteht, das auf einer Trägerplatte (1) angeordnet ist, die in einem bestimmten Abstand vom Boden des Gehäuses angebracht ist und mit diesem Boden eine Kammer (4) begrenzt, in der das filtrierte Wasser gesammelt wird, wobei die Trägerplatte (1) mit zwei Arten von Durchführungen (14, 13) nämlich Typ A und Typ B, versehen ist, von denen jede einen mit Öffnungen versehenen Kopf (15, 16), der in das körnige Material (3) eingebettet ist, und einem Hohlschaft (17, 18), der nach unten zur Kammer offen ist, aufweist, wobei die Schäfte (18) der Durchführungen (14) vom Typ A je eine untere Öffnung in Form eines Schlitzes (22) und eine obere Öffnung (21) und die Schäfte (17) der Durchführungen (13) vom Typ B eine obere Öffnung (19) und in einem bestimmten Abstand von dieser Öffnung entweder eine untere Öffnung in Form eines Schlitzes oder eine Anzahl von unteren Öffnungen (20), die übereinander angeordnet sind, aufweisen, wobei die untere Öffnung oder die unterste der übereinander angeordneten Öffnungen oberhalb der oberen Öffnung (21) des Schaftes (18) der Durchführungen (14) des Typs A angeordnet ist, und wobei diese Anordnung durch das Vorhandensein eines Luftpolsters einer bestimmten Höhe unter der Trägerplatte (1) während der Filtrationsphase gleichzeitig durch die Durchführungen des Typs A das Sammeln des filtrierten Wassers in der Kammer und durch die Durchführungen des Typs B die Verteilung der Luft von unten nach oben in das körnige Material ermöglicht.

2. Filter nach Anspruch 1,
dadurch gekennzeichnet, daß die n unteren übereinander angeordneten Öffnungen (20) des Schaftes der Durchführungen B (13) jeweils den gleichen Abstand voneinander und den gleichen Querschnitt aufweisen.

3. Filter nach Anspruch 1,
dadurch gekennzeichnet, daß der Gesamtquerschnitt $N_1 \times s_1$ der oberen Öffnungen (13) der Durchführungen B so bestimmt wird, daß die Höhe ($h_3$) des Luftpolsters ausreicht, um bei minimalem Gasdurchsatz eine gleichmäßige Versorgung aller Durchführungen B und folglich eine gleichmäßige Gasverteilung im Inneren des körnigen Materials zu erhalten.

4. Filter nach Anspruch 1,
dadurch gekennzeichnet, daß der Gesamtquerschnitt der Öffnungen der Durchführungen B so bemessen ist, daß bei einem maximalen Durchsatz der Luft, die unter die Blatte eingebracht wurde, die Öffnungen der Durchführungen A in der filtrierten Flüssigkeit eingetaucht bleiben.

**Claims**

1. A filter filled with granular material, for effecting the nitrification of water in a process comprising a filtration phase during which nitrification is carried out by means of aerobic bacteria, the water to be treated flowing from top to bottom and being put in contact with the atmospheric air circulating from the bottom to the top of the granular material, and a filter declogging and cleaning phase during which the filter is washed by a stream of water and air circulating from bottom to top, said filter comprising a vessel open at the top and a granular material (3) arranged on a supporting floor (1) provided at a distance from the base of the vessel and defining with this base a chamber (4) in which the filtered water is collected, the supporting floor (1) being fitted with two types, A and B, of nozzles (14, 13), each of which comprises a perforated head (15, 16) immersed in the granular material (3) and a hollow stem (18, 17) open at the lower end descending into the chamber, the stems (18) of the A-type nozzles (14) being provided with a lower orifice in the form of a slit (22) and an upper orifice (21), while the stems (17) of the B-type nozzles (13) have an upper orifice (19) and, separated from this orifice by a certain distance, either a lower orifice in the form of a slit or a number n of lower, stepped orifices (20), the lower orifice or the lowest of the stepped orifices being provided at a level higher than that of the upper orifice (21) of the stems (18) of the A-type nozzles (14), this arrangement allowing the two types of nozzles to operate simultaneously during the filtration phase by means of the presence, under the supporting floor (1), of an air cushion of a certain thickness in such a way that the nozzles of type A ensure collection of the filtered water in the chamber and the others, of type B, ensure distribution of the air from the bottom to the top of the granular material (3).

2. A filter according to claim 1, characterized in that the n lower, stepped orifices (20) in the stems of the B nozzles (13) are equidistant and their sections s are equal.

3. A filter according to claim 1, characterized in that the total section $N_1 \times s_1$ of the upper orifices (19) of the B nozzles is determined in such a way that the thickness ($h_3$ of the air cushion is sufficient to allow, for the minimum output of gas, the uniform supply of all the B nozzles and therefore a homogeneous distribution of the gas within the granular material.

4. A filter according to claim 1, characterized in that the total section of the orifices in the B nozzles is such that for a maximum delivery of air introduced under the floor the orifices of the A nozzles remain immersed in the filtered liquid.

# Fig.1

# Fig.2

# Fig.3